Europäisches Patentamt

European Patent Office

Office européen des brevets

(19)

(11) Veröffentlichungsnummer: **0 035 057**
**A1**

(12) **EUROPÄISCHE PATENTANMELDUNG**

(21) Anmeldenummer: **80107300.8**

(22) Anmeldetag: **24.11.80**

(51) Int. Cl.³: **G 08 C 23/00**, H 04 B 9/00

(30) Priorität: **04.03.80 DE 3008148**

(43) Veröffentlichungstag der Anmeldung: **09.09.81**
**Patentblatt 81/36**

(84) Benannte Vertragsstaaten: **BE CH FR GB LI SE**

(71) Anmelder: **Scharmann GmbH & Co.,**
**Hugo-Junkers-Strasse 12-32,**
**D-4050 Mönchengladbach 2 (DE)**

(72) Erfinder: **Berner, Eckhardt, Ing. grad., Dohrer**
**Strasse 193, Mönchengladbach 2 (DE)**
Erfinder: **Mirbach, Hermann-Josef, Ing. grad.,**
**Nordstrasse 86, D-4050 Mönchengladbach (DE)**

(74) Vertreter: **Wangemann, Horst, Dipl.-Ing.,**
**Stresemannstrasse 28, D-4000 Düsseldorf (DE)**

(54) **Datenübertragungseinrichtung zwischen sich relativ zueinander drehenden Teilen einer Werkzeugmaschine.**

(57) In oder an den zueinander axial oder radial parallelen Wänden beider Maschinenteile ist je eine Querschnittshälfte (4, 5) eines konzentrisch um die relative Drehachse der Maschinenteile angeordneten Ringkanals (7) mit impuls-reflektierender Wand vorgesehen, und in der Querschnitts-hälfte des einen Maschinenteils (1) ist ein Impulsgeber (8) und in der Querschnittshälfte des anderen Maschinenteils (2) ein Impulsempfänger (11) angeordnet.

EP 0 035 057 A1

Patentanwalt

Dipl.-Ing. H. Wangemann

Dresdner Bank, Düsseldorf, Kto. 51–419 655
Postscheck-Konto: Köln 1688 12

0035057

4 Düsseldorf, den 21.11.1980
Stresemannstraße 28
Fernruf 36 35 31

Meine Akte Nr. 5989Eu/Lo

Firma Scharmann GmbH & Co., Hugo-Junkers-Strasse 12 - 32, 4o5o Mönchengladbach - 2/BR Deutschland.

Datenübertragungseinrichtung zwischen sich relativ zueinander drehenden Teilen einer Werkzeugmaschine.

Die Erfindung bezieht sich auf eine Datenübertragungseinrichtung der im Oberbegriff des Hauptanspruches genannten Art.

Zur Übertragung von Daten zwischen sich relativ zueinander drehenden Teilen einer Werkzeugmaschine bedient man sich mechanischer Übertragungsmittel, wie Schleifringe, aber auch einer drahtlosen Übertragung, wie z.B. Funk oder induktive Kopplung. Diese bekannten Einrichtungen haben den Nachteil eines aufwendigen und kostspieligen Aufbaus oder aber sie sind störungsempfindlich oder aber sind Fehlimpulse durch äußere Einwirkung auf die Einrichtung nicht zu vermeiden.

Der Erfindung liegt daher die Aufgabe zugrunde, eine Datenübertragungseinrichtung der eingangs genannten Gattung zu schaffen, bei der keine Störungen und Fehlübertragungen bei relativ hoher Drehgeschwindigkeit der beiden Teile zueinander auftreten, bei der ferner Fehlimpulse durch mechanische Kontakte und Funkenstörung und dgl. vermieden werden und ferner die Übertragung unabhängig von äußeren Einflüssen und

- 2 -

Feldern fehlerfrei erfolgen kann. Auch soll eine Ungenauigkeit der Positionierung der beiden Teile gegeneinander für
die Datenübertragung ohne oder ohne nennenswerten Einfluß
sein und letztlich soll das Anbringen der erfindungsgemäßen
Datenübertragungseinrichtung auch an bereits bestehende
Werkzeugmaschinen ohne größeren Aufwand möglich sein.

Zur Lösung dieser Aufgabe sieht die Erfindung die Merkmale
des kennzeichnenden Teils des Hauptanspruches vor.- Die
Merkmale der Unteransprüche dienen der Weiterentwicklung und
Verbesserung der Merkmale des Hauptanspruches.

Der Vorteil der erfindungsgemäßen Einrichtung offenbart
sich in ihrer Einfachheit und Sicherheit bei Erschütterung
und äußeren Einflüssen, ferner in der Genauigkeit/Impuls-
übertragung selbst bei hohen Geschwindigkeiten.

Auf der Zeichnung sind Ausführungsformen der erfindungsgemäßen Übertragungseinrichtung dargestellt, und zwar zeigt

Fig. 1    in perspektivischer Ansicht die beiden Hälften zweier
          relativ zueinander rotierender ringförmige Maschinenteile,

Fig. 2    einen Teilquerschnitt durch die beiden ringförmigen
          Teile nach Fig.2,

Fig. 3 eine weitere Ausführungsform, bei der die beiden
relativ zueinander drehbaren Maschinenteile mit
zwei konzentrischen Ringkanälen versehen sind
und

Fig. 4 ein Ausführungsbeispiel für die Anordnung mehrerer
Impulssender und Empfänger an einem einzigen Ringkanal.

Von dem sich drehenden Teil 1 der Werkzeugmaschine, deren
Drehrichtung um die Achse A durch den Doppelpfeil 3 kenntlich
gemacht ist, soll ein datenübertragender Impuls auf den
gleichfalls rotierenden, vorzugsweise jedoch feststehenden
Maschinenteil 2 übertragen werden. Hierzu besitzt der Maschinenteil 1 eine ringförmige Ausnehmung 4, die konzentrisch
zu der Mittelachse A des Teiles 1 an diesem angebracht ist.
Auf gleicher Höhe und parallel zu dieser Ausnehmung 4 des
Teiles 1 ist in dem Maschinenteil 2 eine gleichartige Ausnehmung 5 derart angebracht, daß die beiden Ausnehmungen 4,5,
da zwischen den beiden Maschinenteilen 1,2 nur ein geringer
Spalt 6 belassen ist, einen Ringkanal mit der allgemeinen
Bezugsziffer 7 von vorzugsweise kreisförmigem Querschnitt
bilden. Die beiden Ausnehmungen 4,5, die gemeinschaftlich den
Ringkanal 7 bilden, sind vorzugsweise mit einer stark impulsreflektierenden Folie ausgelegt, die nicht näher dargestellt
ist.

- 4 -

Eine solche Folie kann zum Beispiel eine Aluminiumfolie sein,
die der guten Reflektierung von Lichtimpulsen innerhalb des
Ringkanals 7 dient.

In der Ausnehmung 4 des Maschinenteils 1 ist ein Impulsgeber
8 fest angeordnet, der vorzugsweise nach beiden Seiten und
damit für beide Drehrichtungen des Maschinenteils 1 Impulse
in und entgegengesetzt zum Uhrzeigersinn in den Kanal 7 abgibt. Die beiden Impulsrichtungen sind durch die Pfeile 9
und 10 gekennzeichnet.

Der vorzugsweise feststehende Maschinenteil 2 trägt in seiner
Ausnehmung 5 einen Empfänger 11, der in der Lage ist, die
aus beiden Richtungen in dem Ringkanal auf ihn zukommenden
Impulse zu empfangen. Der Geber 8 und der Empfänger 11 sind
derart angeordnet, daß beim Drehen des Teiles 1 gegenüber dem
Teil 2 der Geber 8 und der Empfänger 11 einander nicht berühren. Die von dem Empfänger 11 aufgenommenen Impulse sind
gleichbleibend oder weitgehend gleichbleibend, da bei gleicher
Impulsgabe durch den Geber 8 das Produkt der Wege a und b
stets gleich ist, gleichgültig, welche Drehrichtung der Teil
1 gegenüber dem Teil 2 hat.

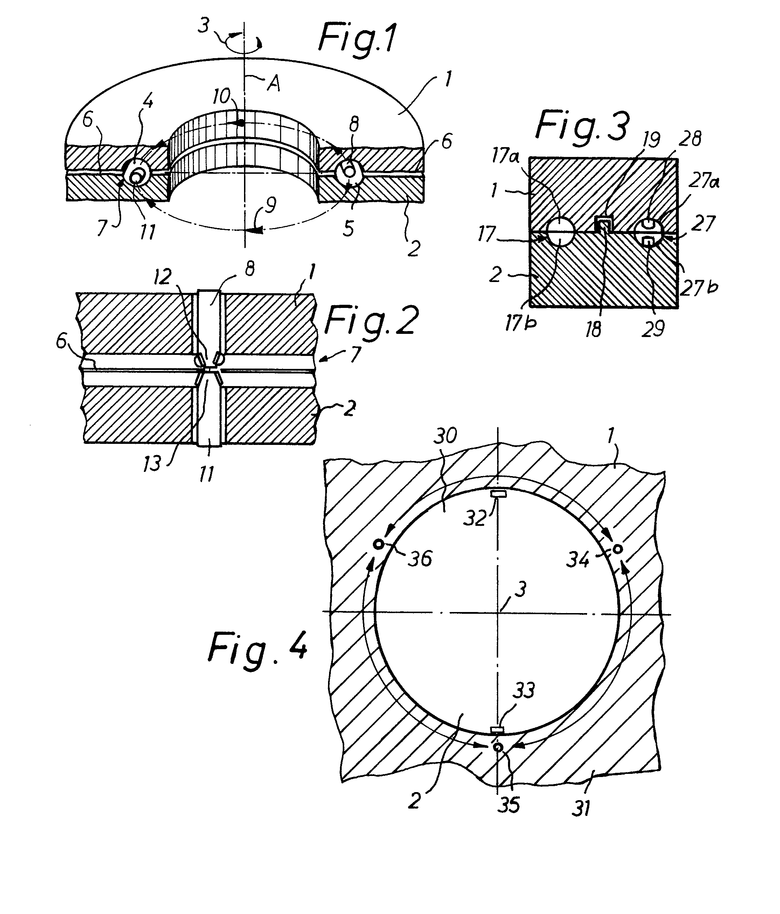

In Fig.2 ist die Anordnung eines Gebers 8 in dem Teil 1 und
des Empfängers 11 in dem Teil 2 dargestellt. Hierbei ist zu
erkennen, daß der Geber 8 als solcher wie auch der Empfänger

- 5 -

rechtwinklig zu dem Ringkanal 7 angeordnet sein können, wobei der Geberkopf 12 und der Empfängerkopf 13, ohne sich zu berühren, in den Ringkanal 7 ragen, dessen Auskleidung für eine gute Impulsübertragung sorgt.

Bei der Ausführungsform nach Fig.3 sind wiederum ein sich drehender Maschinenteil 1 und ein vorzugsweise feststehender Maschinenteil 2 vorgesehen. In beiden Teilen 1,2 sind parallel und konzentrisch nebeneinander zwei Ringkanäle 17,27 angeordnet, von denen der Ringkanal 17 einen kleineren und der Ringkanal 27 einen größeren Durchmesser besitzen. Um die Impulse des Kanals 17 nicht auf den Empfänger 29 des Kanals 27 und die Impulse des Gebers 28 nicht in den Kanal 17 wirken zu lassen, ist der feststehende Maschinenteil 2 zwischen den beiden Kanälen 17,27 mit einer Ringleiste 18 versehen, die in eine entsprechende Ringnut 19 des Maschinenteils 1 hineinragt. Die Anordnung kann auch umgekehrt getroffen sein, wie auch statt der rechteckigen oder quadratischen Ringleiste eine dreieckförmige oder andersartig gestaltete Leiste und eine entsprechende Nut Anwendung finden können.

Die gleiche Abdeckung, wie sie Fig.3 zwischen den beiden Ringkanälen 17,27 vorsieht, kann auch beiderseits des Ringkanals 7 in Fig.1 bzw. beidseits der beiden Ringkanäle 17,27 vorgesehen sein, um ein Eindringen von Impulsen in die Ringkanäle 7,17,27 zu vermeiden und ein störungsfreies Arbeiten

- 6 -

der Übertragungseinrichtung zu gewährleisten.

In Fig.4 ist die Anordnung des Gebers und Empfängers einer weiteren Ausführungsform einer Üb rtragungseinrichtung dargestellt. Der besseren Übersichtlichkeit halber sind die beiden Maschinenteile 1,2 als kreisförmige Innenfläche 30 und eine diese umgebende Außenfläche 31 dargestellt. In Wirklichkeit liegen die Teile, wie die Teile 1,2 in Fig.1, übereinander.- Der durch die kreisförmige Innenfläche 30 dargestellte Maschinenteil 1 besitzt in seiner Ausnehmung des gemeinsamen Ringkanals zwei sich im Bezug auf die Drehachse 3 des Teiles 1 diametral gegenüberliegende Geber 32,33, während der feststehende, durch die Fläche 31 symbolisierte Maschinenteil 2 in seiner Ausnehmung, die der Ausnehmung 5 in Fig.1 entspricht, jeweils um 120° gegeneinander versetzte Empfänger 34,35,36 aufweist. Gleichgültig in welche Richtung sich der Maschinenteil 1 um seine Achse 3 dreht, stets ist der Abstand eines Gebers 32 oder 33 von einem der Empfänger 34 bis 36 nicht größer als 60'Winkelbogeng-rade. Auch hier ist der Weg, der von den Gebern 32,33 abgegebene Impuls gleichmäßig oder weitgehend gleichmäßig.

Eine der Anordnung nach Fig.4 entsprechende Anordnung der Sender und Empfänger kann auch bei einer Ausführungsform nach Fig.3 gewählt werden, d.h. auch dort kann ein winkelmäßiger

0035057

Versatz der Geber und Empfänger in zwei Ringkanälen gewählt
werden.

Selbst dann, wenn die Impulsgabe und insbesondere der Senderweg einen wellenförmigen Signalverlauf im Empfänger bewirkt,
läßt sich eine einwandfreie Datenübertragung erreichen, wenn
die empfangene Impulslinie geglättet wird.

Das Zuführen der Energie zu dem sich drehenden Maschinenteil
1 kann an jeder beliebigen Stelle des beweglichen Maschinenteils oder eines mit ihm verbundenen weiteren Werkzeugmaschinenteils erfolgen, wie auch andere Mittel an dem beweglichen
Maschinenteil vorgesehen werden können, um die Impulsgabe des
oder der Geber zu dem vorzugsweise feststehenden Maschinenteil zu bewirken. So kann der bewegliche Maschinenteil einen
Dauerimpulsgeber aufweisen, der keiner kontinuierlichen
Energiezufuhr von außen bedarf, wie auch die Impulsgabe nach
Art und Stärke gewählt werden kann.

Auch von der Erfindung erfaßt ist eine Ausführungsform, bei
der der Ringkanal aus Teilen eines querschnittgeteilten
Rohres zwischen den einen größeren Abstand aufweisenden
Maschinenteil gebildet ist, und ferner eine Ausführungsform,
bei der der Ringkanal wiederum aus Teilen eines querschnittgeteilten Rohres gebildet ist und mindestens eines der Teile
an der Außenseite z.B. des sich drehenden Maschinenteils angeordnet ist.

Auch in diesen Fällen entsteht ein weitgehend geschlossener Ringkanal zum ungestörten Weiterleiten und Längsreflektieren der Impulse.

Unter impulsreflektierend ist vorstehend das Reflektieren des Mediums zu verstehen, mit dem die in Impulsform vorliegende Information übertragen wird.

Patentanwalt
**Dipl.-Ing. H. Wangemann**
Dresdner Bank, Düsseldorf, Kto. 51-419655
Postscheck-Konto: Köln 1688 12

4 Düsseldorf, den 21.11. 1980
Stresemannstraße 28
Fernruf 36 35 31

0035057

Scharmann GmbH & Co.

Meine Akte Nr.5989 EuW/Al

## P a t e n t a n s p r ü c h e

1. Datenübertragungseinrichtung zwischen sich relativ zueinander drehenden Teilen einer Werkzeugmaschine, dadurch gekennzeichnet, daß in oder an den zueinander axial oder radial parallelen Wänden beider Maschinenteile (1,2) je eine Querschnittshälfte (Ausnehmung 4,5,17a,17b,27a,27b) eines konzentrisch um die relative Drehachse der Maschinenteile angeordneten Ringkanals (7,17,27) mit impulsreflektierender Wand vorgesehen ist und in der Querschnittshälfte des einen Maschinenteils (1) ein Impulsgeber (8,28) und in der Querschnittshälfte des anderen Maschinenteils (2) ein Impulsempfänger (11,29) angeordnet sind.

2. Datenübertragungseinrichtung nach Anspruch 1, dadurch gekennzeichnet, daß der Querschnitt des Ringkanals (7,17,27) kreisförmig ist.

3. Datenübertragungseinrichtung nach Anspruch 1 und 2, dadurch gekennzeichnet, daß der Geber (8,28) derart in der einen

- 1o -

Ringkanalquerschnittshälfte angeordnet ist, daß er Impulse nach beiden Drehrichtungen des einen Maschinenteils (2) sendet.

4. Datenübertragungseinrichtung nach Anspruch 1 bis 3, dadurch gekennzeichnet, daß der Empfänger derart in seiner Ringkanalquerschnittshälfte angeordnet ist, daß er Impulse aus beiden Drehrichtungen empfängt.

5. Datenübertragungseinrichtung nach Anspruch 1 bis 4, dadurch gekennzeichnet, daß der Geberkörper und der Empfängerkörper senkrecht zur Trennebene (Spalt 6) beider Maschinenteile (1,2) in diesen angeordnet ist.

6. Datenübertragungseinrichtung nach Anspruch 1 und einem oder mehreren der Ansprüche 2 bis 5, dadurch gekennzeichnet, daß mehrere parallele Ringkanäle (17,27) unterschiedlichen Durchmessers an den beiden Maschinenteilen (1,2) gebildet sind.

7. Datenübertragungseinrichtung nach Anspruch 6, dadurch gekennzeichnet, daß die Geber und Empfänger der parallelen konzentrisch zur Drehachse und zueinander gelegenen Ringkanäle (17,27) winkelmässig gegeneinander versetzt sind.

8. Datenübertragungseinrichtung nach Anspruch 1 und einem oder mehreren der Ansprüche 2 bis 7, dadurch gekennzeichnet, daß der Ringkanal (7,17,27) auf Höhe des Trennschlitzes seitlich abgedeckt ist.

9. Datenübertragungseinrichtung nach Anspruch 1 und einem oder mehreren der Ansprüche 2 bis 8, dadurch gekennzeichnet, daß jede Querschnittshälfte des Ringkanals (7,17,27) halbkreisförmigen oder annähernd halbkreisförmigen Querschnitt besitzt.

10. Datenübertragungseinrichtung nach Anspruch 1 und einem oder mehreren der Ansprüche 2 bis 10, dadurch gekennzeichnet, daß die Querschnittshälften des Ringkanals mit einem stark impulsreflektierenden Belag oder einer solchen Folie ausgekleidet sind.

11. Datenübertragungseinrichtung nach Anspruch 1 und einem oder mehreren der Ansprüche 2 bis 10, dadurch gekennzeichnet, daß der Ringkanal aus einem querschnitt-geteilten, zu einem Ring geformten Rohr gebildet ist.

12. Datenübertragungseinrichtung nach Anspruch 10, dadurch gekennzeichnet, daß die eine der rohrartigen Querschnittshälften des Ringkanals an der Außenseite des einen Maschinenteils angeordnet ist.

0035057

13. Datenübertragungseinrichtung nach Anspruch 12, dadurch
gekennzeichnet, daß die rohrartigen Querschnittshälften
zwischen den benachbarten parallelen Wänden der beiden
Maschinenteile angeordnet sind.

Fig.1

Fig.3

Fig.2

Fig.4

**Europäisches Patentamt**

**EUROPÄISCHER RECHERCHENBERICHT**

Nummer der Anmeldung

EP 80 10 7300

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE – A – 2 113 690 (UHLE)<br><br>* Seite 7, Zeile 27 bis Seite 9, Zeile 33; Ansprüche 1-17; Figuren 1-3 *<br>--- | 1-4,9-13 |
| | DE – A – 2 819 125 (INTERNATIONAL STANDARD ELECTRIC)<br><br>* Seite 7, Zeile 21 bis Seite 8, Zeile 18; Figur 2 * | 1-4 |

**KLASSIFIKATION DER ANMELDUNG (Int. Cl.)**

G 08 C 23/00
H 04 B 9/00

**RECHERCHIERTE SACHGEBIETE (Int. Cl.)**

G 08 C 23/00
H 04 B 9/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 09.06.1981 | WANZEELE |

EPA form 1503.1  06.78